# EUROPEAN PATENT APPLICATION

(11) **EP 4 470 380 A1**
(43) Date of publication of application: **04.12.2024**
(21) Application number: 23911736.9
(22) Date of filing: 14.12.2023
(51) Int. Cl.: A22C 21/00, A22C 17/00

(54) **MEAT PROCESSING DEVICE AND MEAT PROCESSING SYSTEM**

(30) Priority: 28.12.2022 JP 2022211037
(71) Applicant: MAYEKAWA MFG. CO., LTD., Tokyo 135-8482 (JP)
(72) Inventor: MATSUMOTO, Kousuke, Tokyo 135-8482 (JP); SAKURAYAMA, Hiroyuki, Tokyo 135-8482 (JP); GOTO, Osamu, Tokyo 135-8482 (JP); KOYAMA, Yusuke, Tokyo 135-8482 (JP)
(74) Representative: Regimbeau
(86) International application number: PCT/JP2023/044759
(87) International publication number: WO 2024/142955

(57) **Abstract**

A meat processing apparatus includes: a first robot arm and a meat separator. The first robot arm has a tool including a scraper at a tip portion. The meat separator is disposed separately from the first robot arm and configured to be inserted into a cut in a workpiece widened by the scraper and move vertically relative to the workpiece to pull a meat part off the workpiece.

## Description

### TECHNICAL FIELD

The present disclosure relates to a meat processing apparatus and a meat processing system.

### BACKGROUND

A meat processing apparatus is known which automatically conveys and processes meat as a workpiece. For example, Patent Document 1 discloses a meat processing apparatus provided with a plurality of conveyors for conveying a workpiece. In this document, the workpiece conveyed by the conveyors is fed into an incision-making station.

### Citation List

### Patent Literature

Patent Document 1: WO2009/139031A

### SUMMARY

### Problems to be Solved

In a processing station equipped with a meat processing apparatus such as the one in Patent Document 1, a workpiece conveyed by a conveyor is processed while lying on the floor. In the processing station, the same hardware can be used to perform complex processing of various types and shapes by changing the software.

Because such complex processing in the processing station requires a relatively little force from a robot arm used, it is difficult to perform processing that requires a large force, such as pulling meat off a workpiece, for example. Therefore, in order to pull meat off a workpiece in a conventional processing station, for example, the meat must be peeled off while gradually cutting it with a blade, which increases processing time and reduces yield since the knife-shaped blade must be inserted in a straight line against the round bone.

In addition, because the processing is performed in the processing station with the workpiece in a lying position, it is difficult for a tool to approach the back surface of the workpiece (i.e., the side facing the floor).

At least one embodiment of the present disclosure was made in view of the above, and an object thereof is to provide a meat processing apparatus and a meat processing system capable of efficiently performing processing that requires a relatively large force.

### Solution to the Problems

(1) In order to solve the above problem, a meat processing apparatus according to at least one embodiment of the present disclosure includes: a first robot arm having a tool including a scraper at a tip portion; and a meat separator disposed separately from the first robot arm and configured to be inserted into a cut in a workpiece widened by the scraper and move vertically relative to the workpiece to pull a meat part off the workpiece.
   According to the above aspect (1), the meat separator is inserted into a cut in a workpiece widened by the scraper disposed at the tip portion of the first robot arm. By relative vertical movement of the workpiece with the meat separator thus inserted, a relatively large force can be exerted between the workpiece and the meat to be pulled off, so that the meat can be pulled off the workpiece efficiently. Additionally, the scraper disposed at the tip portion of the first robot arm can approach the workpiece from various angles by changing the posture of the first robot arm. Thus, the present apparatus can be applied to workpieces of various shapes.
(2) In another aspect, in the above aspect (1), the tool is a multitool including a cutter for making an incision in the workpiece with the cut widened by the scraper.
   According to the above aspect (2), the tool disposed at the tip portion of the first robot arm is configured as a multitool that includes functions of a scraper and a cutter. This allows efficient implementation of complex processing, such as making an incision in the workpiece with the cut widened by the scraper.
(3) In another aspect, in the above aspect (1) or (2), the apparatus further includes a second robot arm disposed separately from the first robot arm and having a clamp part at a tip portion for holding the workpiece. The first robot arm is configured to process the workpiece held by the clamp part using the tool.
   According to the above aspect (3), the workpiece to be processed is held by the second robot arm, which is disposed separately from the first robot arm. The first robot arm processes the workpiece held by the second robot arm, enabling flexible implement of various complex processing by changing the posture of both robot arms.
(4) In another aspect, in the above aspect (3), the second robot arm is configured to move the workpiece while the meat separator inserted into the cut is fixed to pull off the meat part.
   According to the above aspect (4), by moving the workpiece held by the second robot arm while the meat separator inserted into the cut widened by the scraper of the tool is fixed, a large force can be exerted between them. Thus, the meat part can be accurately pulled off the workpiece.
(5) In another aspect, in the above aspect (4), the tool is configured to cut the meat part pulled off to separate the meat part from the workpiece.
   According to the above aspect (5), the pulled-off meat part can be easily separated from the workpiece by cutting the pulled-off meat part with the tool as described above.
(6) In another aspect, in the above aspect (1) or (2), the first robot arm has 6 or more axes.
   According to the above aspect (6), since the first robot arm has six or more axes, the robot arm can operate flexibly, such as causing the tool at the tip portion to approach the workpiece at various angles, enabling various processing.
(7) In order to solve the above problem, a meat processing system according to one aspect includes: a conveyance line for conveying the workpiece; at least one processing station for processing the workpiece conveyed by the conveyance line; and the meat processing apparatus in the above aspect (1) or (2).

According to the above aspect (7), since the above-described meat processing apparatus is combined with the processing station for processing the workpiece conveyed by the conveyance line, it is possible to achieve a meat processing system that can be widely used for processing operations where conventional processing stations do not have enough power or tools are difficult to approach.

### Advantageous Effects

At least one embodiment of the present disclosure provides a meat processing apparatus and a meat processing system capable of efficiently performing processing that requires a relatively large force.

### BRIEF DESCRIPTION OF DRAWINGS

FIG. 1 is a schematic configuration diagram of a meat processing system according to an embodiment.
FIG. 2 is a schematic side view of a meat processing apparatus of FIG. 1.
FIG. 3 is a schematic configuration diagram of the meat processing apparatus of FIG. 1.
FIG. 4 is an enlarged view of a tool disposed at a tip portion of a first robot arm of FIG. 3.
FIG. 5 is a flowchart of operation flow of the meat processing apparatus according to an embodiment.
FIG. 6A is an explanatory diagram of operation corresponding to each step in FIG. 5.
FIG. 6B is an explanatory diagram of operation corresponding to each step in FIG. 5.
FIG. 6C is an explanatory diagram of operation corresponding to each step in FIG. 5.
FIG. 6D is an explanatory diagram of operation corresponding to each step in FIG. 5.
FIG. 6E is an explanatory diagram of operation corresponding to each step in FIG. 5.
FIG. 6F is an explanatory diagram of operation corresponding to each step in FIG. 5.
FIG. 6G is an explanatory diagram of operation corresponding to each step in FIG. 5.

### DETAILED DESCRIPTION

Embodiments of the present invention will now be described in detail with reference to the accompanying drawings. It is intended, however, that unless particularly identified, dimensions, materials, shapes, relative positions, and the like of components described in the embodiments shall be interpreted as illustrative only and not intended to limit the scope of the present invention.

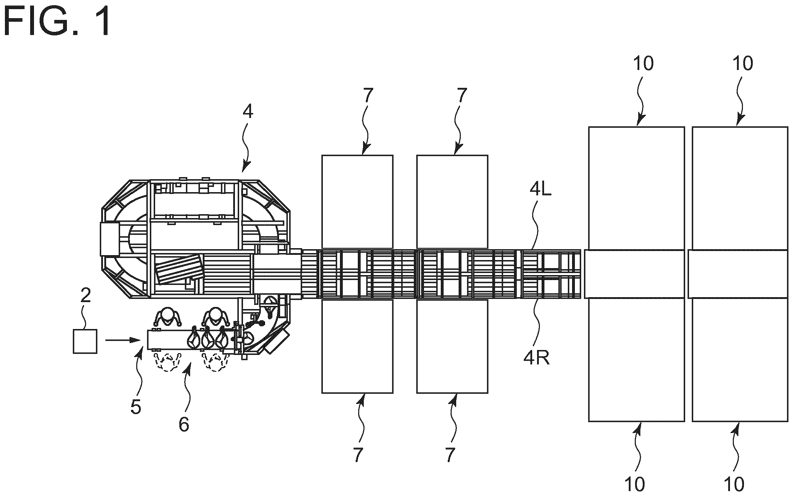

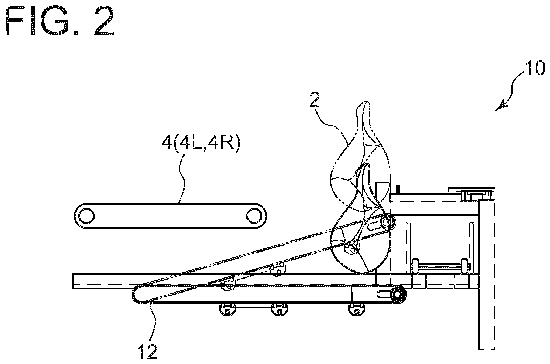

FIG. 1 is a schematic configuration diagram of a meat processing system 1 according to an embodiment. FIG. 2 is a schematic side view of a meat processing apparatus 10 of FIG. 1. The meat processing system 1 is a system for automatically conveying and processing a workpiece 2 which is meat. The workpiece 2 is meat including a bone part and a meat part, which may be pork, beef, horse meat, fish, or poultry.

The meat processing system 1 includes a conveyance line 3, at least one processing station 7, and at least one meat processing apparatus 10.

The conveyance line 3 is configured to convey the workpiece 2 to be processed, and has a conveyor 4 that can convey the workpiece supplied from a supply unit (not shown) located upstream to the processing station 7 or the meat processing apparatus 10 located downstream. The conveyor 4 receives the workpiece 2 from the supply unit at an inlet portion 5, which is at the upstream end. In the vicinity of the inlet portion 5, a pre-processing area 6, where workers can be positioned on both sides of the conveyor 4, is provided. In the pre-processing area 6, the workpiece 2 can be pre-processed as appropriate at the stage prior to being processed in the processing station 7 or the meat processing apparatus 10 located downstream.

Although the conveyor 4 is composed of a single lane at the relatively upstream side including the pre-processing area 6, the conveyor 4 splits into a left lane 4L and a right lane 4R in the middle, and the workpiece 2 conveyed from the upstream side is distributed to either the left lane 4L or the right lane 4R by a switching part 8. The left lane 4L and the right lane 4R are provided with respective processing stations 7 and meat processing apparatuses 10. The workpiece 2 processed in the processing station 7 and the meat processing apparatus 10 is conveyed through the conveyance lane to the outside.

The processing station 7 receives the workpiece 2 from the conveyor 4 and processes the meat by a multi-axis robot (not shown) equipped with a meat processing tool. The meat processing in the processing station 7 is performed using a relatively small force, for example, as in conventional meat processing apparatuses for meat processing such as making an incision in a workpiece (for example, see JP4961613B, JP4867050B, JP5788076B, JP5788077B, or JP2022-170894A, etc.).

In this embodiment, two processing stations 7 are provided along the left lane 4L and the right lane 4R each, but the number of processing stations 7 in each lane is not limited. The processing stations 7 may have the same configuration or different configurations.

The meat processing apparatus 10 is a device for performing processing that requires a large force than in the processing station 7. In this embodiment, the processing of pulling a meat part off the workpiece 2, which is meat including a bone part, will be described as an example of such processing, but other processing may also be covered. As shown in FIG. 2, the meat processing apparatus 10 receives the workpiece 2 conveyed by the conveyor 4 located at the upper stage, pulls off and separates the meat part from the workpiece 2. The meat part separated from the workpiece 2 is carried out by a discharge conveyor 11 located at the lower stage (the remaining workpiece 2 from which the meat part has been separated is returned to the conveyor 4 and conveyed to other downstream processes).

The meat processing system 1 may be equipped with a controller for controlling each of the above components. The controller is one or more computing devices. A processor included in the computing device may be a CPU, a GPU, an MPU, a DSP, or a combination of these, or may be implemented by an integrated circuit such as a PLD, an ASIC, an FPGA, or an MCU. The computing device may include a memory such as a ROM, a RAM, or a flash memory, as appropriate.

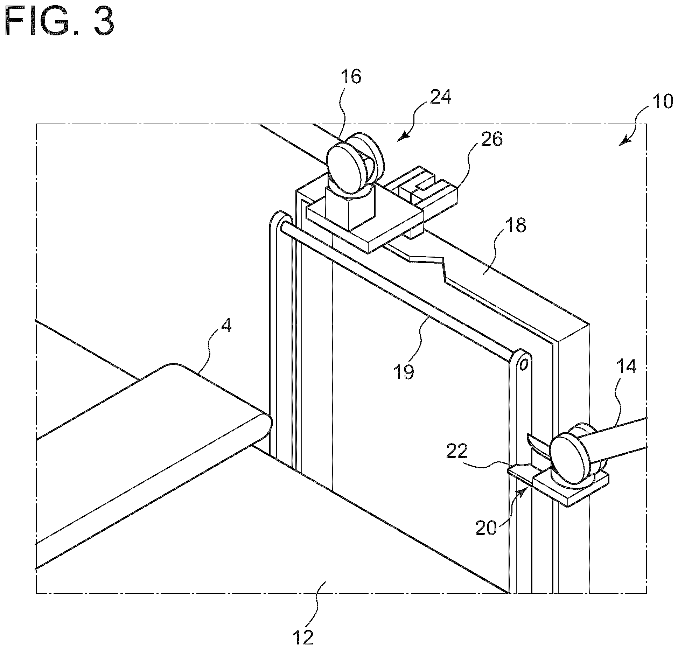

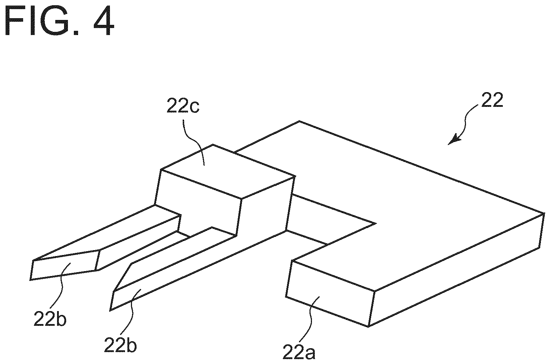

Next, a specific configuration of the meat processing apparatus 10 will be described. FIG. 3 is a schematic configuration diagram of the meat processing apparatus 10 of FIG. 1. FIG. 4 is an enlarged view of a tool 22 disposed at a tip portion 20 of a first robot arm 14 of FIG. 3.

The meat processing apparatus 10 has an apparatus body 12, a first robot arm 14, a second robot arm 16, and a meat separator 18.

The apparatus body 12 is fixed to the floor on which the meat processing apparatus 10 is installed, and the configuration is not limited.

The first robot arm 14 is a multi-axis robot installed in the apparatus body 12 and is movable based on a control signal from a controller (not shown). The first robot arm 14 has a robot structure with six or more axes so that the tool 22 mounted on the tip portion 20 can approach the workpiece 2 at any angle or orientation.

The tool 22 disposed at the tip portion 20 of the first robot arm 14 includes at least a scraper 22a. In this embodiment, as illustrated in FIG. 4, the tool 22 is configured as a multitool including, in addition to the scraper 22a, a cutter 22b for making an incision in the workpiece 2. By using the tool 22, a cut can be formed in the workpiece 2 with the cutter 22b, and simultaneously the cut can be widened with the scraper 22a.

The cutter 22b is attached to the body of the tool 22 via a cutter holder 22c. A vibration unit (not shown) for driving the cutter 22b is housed inside the cutter holder 22c.

The second robot arm 16 is a multi-axis robot installed in the apparatus body 12 and is movable based on a control signal from a controller (not shown), as with the first robot arm 14. The second robot arm 16 also has a robot structure with six or more axes, and is configured to hold the workpiece 2 on the conveyor 4 by using a clamp part 26 mounted on a tip portion 24.

The meat separator 18 is configured to be inserted into a cut formed in the workpiece 2 to pull the meat part off the workpiece 2. As described below, when inserting the meat separator 18, a cut formed in the workpiece 2 is widened by the scraper included in the tool 22 at the tip portion 20 of the first robot arm 14, so that the meat separator 18 is inserted into the cut accurately. Further, the meat separator 18 is opposite a holding member 19 that can be switched between a position retracted from the meat separator 18 (retracted position) and a position in proximity to the meat separator 18 for holding the workpiece 2 into which the meat separator 18 is inserted (holding position) by power from a drive source (not shown) (FIG. 3 shows an example of the holding member 19 in the holding position.)

Each of the first robot arm 14, the second robot arm 16, and the meat separator 18 is disposed separately from the apparatus body 12.

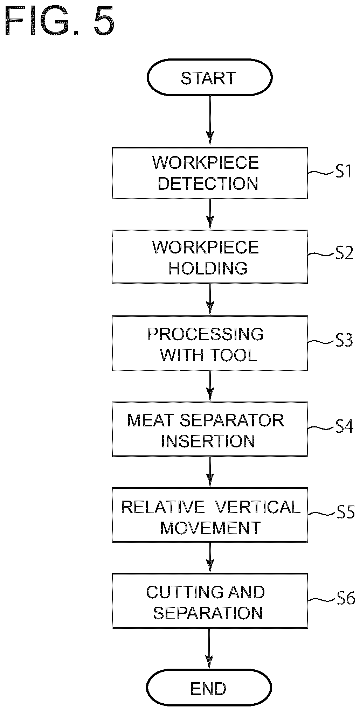

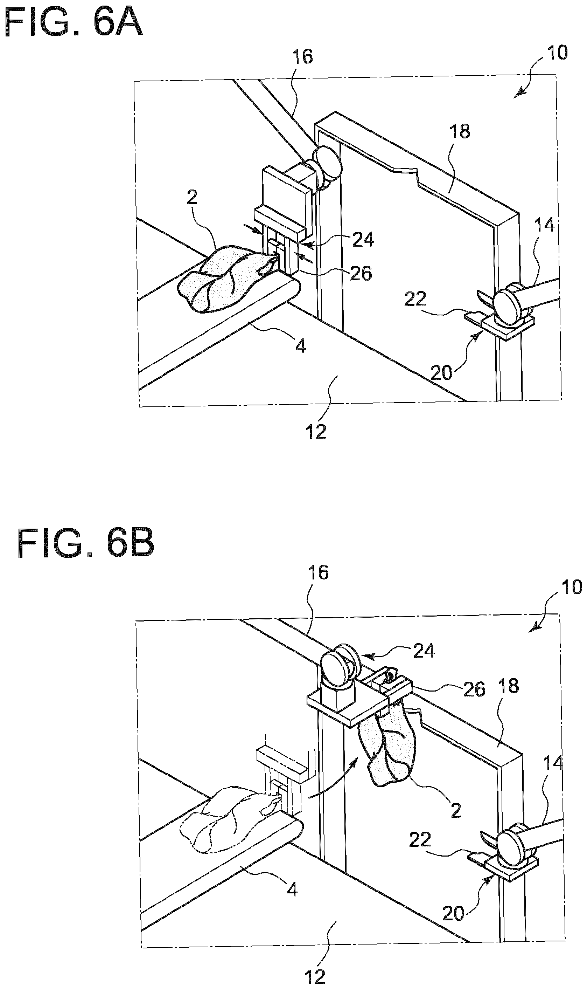

Next, the operation of the meat processing apparatus 10 having the above configuration will be described. FIG. 5 is a flowchart of operation flow of the meat processing apparatus 10 according to an embodiment. FIGs. 6A o 6F are explanatory diagrams of operation corresponding to each step in FIG. 5.

First, the workpiece 2 conveyed by the conveyor 4 is detected (step S1), and the workpiece 2 is held by the second robot arm 16 (step S2), as shown in FIG. 6A. In step S1, the workpiece 2 on the conveyor 4 is recognized by a detection sensor (not shown) to detect the workpiece 2 to be processed by the meat processing apparatus 10 and to identify its posture. In step S2, on the basis of the detection result of step S1, the second robot arm 16 is operated relative to the workpiece 2 placed in a predetermined posture on the conveyor 4 to hold the workpiece 2 by the clamp part 26 at the tip portion 24 of the second robot arm 16.

In this embodiment, meat including leg parts of livestock is treated as the workpiece 2. In step S1, the foot part of the workpiece 2 is identified by recognizing the shape of workpiece 2, and in step S2, the second robot arm 16 is operated to hold the identified foot part by the clamp part 26.

The workpiece 2 held by the second robot arm 16 is placed in a posture (in this embodiment, in a suspended posture as shown in FIG. 6B) suitable for processing performed in the subsequent step S3.

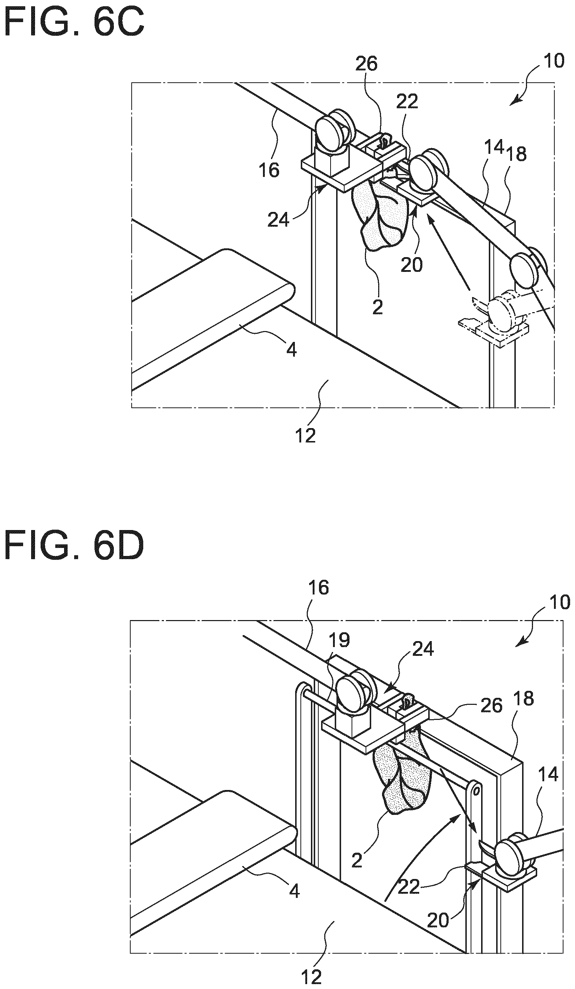

Then, as shown in FIG. 6C, the workpiece 2 held by the second robot arm 16 is processed by using the tool 22 at the tip portion 20 of the first robot arm 14 (step S3). The processing performed in step S3 is not limited, but in this embodiment, as one example, the workpiece 2 held in a suspended posture is subjected to an incision-making process by a cutter included in the tool 22.

Then, as shown in FIG. 6D, the meat separator 18 is inserted into the cut in the workpiece 2 widened by the scraper included in the tool 22 (step S4). As described above, the tool 22 is configured as a multitool including a scraper in addition to a cutter used for the processing of step S3. Therefore, in the processing of step S3, the tool 22 is used for the incision-making process with the cutter and simultaneously for widening the cut in the workpiece 2 with the scraper. In step S4, the meat separator 18 is inserted into the cut thus widened by the scraper. While the meat separator 18 is inserted into the cut in the workpiece 2, the holding member 19 is rotated from the retracted position to the holding position so that the workpiece 2 is fixed between the meat separator 18 and the holding member 19, whereby the posture of the workpiece 2 is stabilized.

Step S4 may include the step of pre-adjusting the position and posture of the workpiece 2 so that the position of the meat separator 18 corresponds to the position of the cut in the workpiece 2 widened by the scraper.

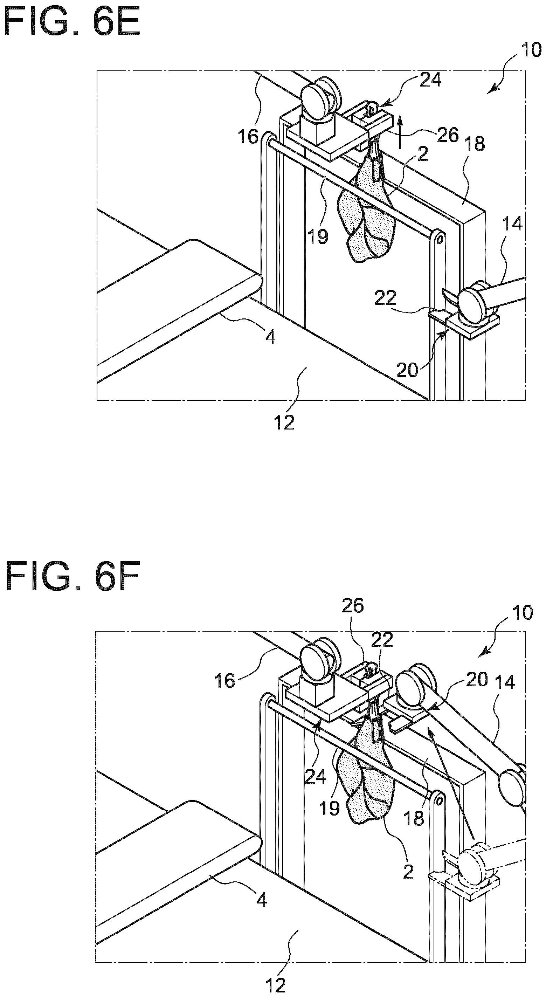

Then, as shown in FIG. 6E, the meat separator 18 is moved vertically relative to the workpiece 2 to pull the meat part off the workpiece 2 (step S5). In this embodiment, while the meat separator 18 inserted into the cut widened by the scraper is fixed to the apparatus body 12, the second robot arm 16 is operated to move the workpiece 2 held by the clamp part 26 at the tip portion 24 of the second robot arm 16. As a result, a large force is exerted between the workpiece 2 and the meat part which engages the meat separator 18 fixed to the apparatus body 12, so that the meat part can be pulled off the workpiece 2 effectively.

Then, as shown in FIG. 6F, the first robot arm 14 is operated to cut and separate the workpiece 2 pulled off in step S5 from the workpiece 2 by using the tool 22 at the tip portion 20 of the first robot arm 14 (step S6). In step S5, the meat part is pulled off the workpiece 2, but the meat part is still partially connected to the workpiece 2. Therefore, in step S6, the connected portion is cut with the cutter included in the tool 22 to separate the pulled-off meat part from the workpiece 2.

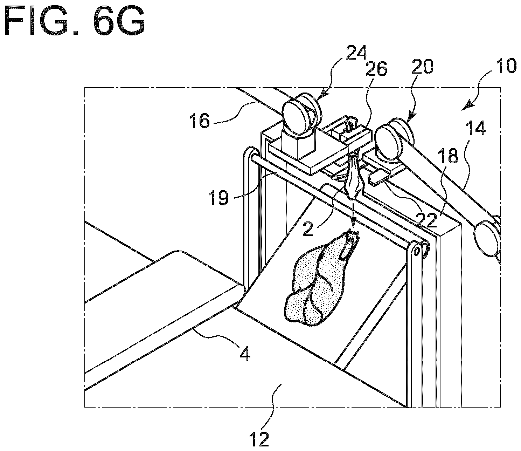

The separated meat part is carried out through the discharge conveyor 11 at the lower stage, as shown in FIG. 6G.

As described above, according to the above-described embodiment, the meat separator 18 is inserted into a cut in the workpiece 2 widened by the scraper included in the tool 22 disposed at the tip portion 20 of the first robot arm 14. By relative vertical movement of the workpiece 2 with the meat separator 18 thus inserted, a relatively large force can be exerted between the workpiece 2 and the meat to be pulled off, so that the meat can be pulled off the workpiece 2 efficiently. Additionally, the tool 22 including the scraper disposed at the tip portion 20 of the first robot arm 14 can approach the workpiece 2 from various angles by changing the posture of the first robot arm 14. Thus, the present apparatus can be applied to workpieces 2 of various shapes.

### Reference Signs List

- 1: Meat processing system
- 2: Workpiece
- 3: Conveyance line
- 4: Conveyor
- 4L: Left lane
- 4R: Right lane
- 5: Inlet portion
- 6: Pre-processing area
- 7: Processing station
- 8: Switching part
- 10: Meat processing apparatus
- 11: Discharge conveyor
- 12: Apparatus body
- 14: First robot arm
- 16: Second robot arm
- 18: Meat separator
- 19: Holding member
- 20: Tip portion
- 22: Tool
- 24: Tip portion
- 26: Clamp part

## Claims

1. A meat processing apparatus, comprising:
a first robot arm having a tool including a scraper at a tip portion; and
a meat separator disposed separately from the first robot arm and configured to be inserted into a cut in a workpiece widened by the scraper and move vertically relative to the workpiece to pull a meat part off the workpiece.

2. The meat processing apparatus according to claim 1,
wherein the tool is a multitool including a cutter for making an incision in the workpiece with the cut widened by the scraper.

3. The meat processing apparatus according to claim 1 or 2, further comprising a second robot arm disposed separately from the first robot arm and having a clamp part at a tip portion for holding the workpiece,
wherein the first robot arm is configured to process the workpiece held by the clamp part using the tool.

4. The meat processing apparatus according to claim 3,
wherein the second robot arm is configured to move the workpiece while the meat separator inserted into the cut is fixed to pull off the meat part.

5. The meat processing apparatus according to claim 4,
wherein the tool is configured to cut the meat part pulled off to separate the meat part from the workpiece.

6. The meat processing apparatus according to claim 1 or 2,
wherein the first robot arm has 6 or more axes.

7. A meat processing system, comprising:
a conveyance line for conveying the workpiece;
at least one processing station for processing the workpiece conveyed by the conveyance line; and
the meat processing apparatus according to claim 1 or 2.
